# EUROPÄISCHE PATENTANMELDUNG

(11) **EP 2 843 821 A2**
(43) Veröffentlichungstag der Anmeldung: **04.03.2015**
(21) Anmeldenummer: 14002940.6
(22) Anmeldetag: 25.08.2014
(51) Int. Cl.: H02M 7/48

(54) **Wechselrichter für mobile Verbraucher**

(30) Priorität: 23.08.2013 DE 202013007486 U
(71) Anmelder: Dometic Sweden AB, 171 54 Solna (SE)
(72) Erfinder: König, Rolf Kiewe, 48282 Emsdetten (DE)
(74) Vertreter: Grosse Schumacher Knauer von Hirschhausen

(57) **Zusammenfassung**

Ein gattungsgemäßer Wechselrichter (2) zum Versorgen von Verbrauchern (4) mit elektrischer Leistung umfasst einen Gleichspannungseingang (2A) für Fahrzeugspannungsquellen (1), einen vorzugsweise als Netzsteckdose ausgebildeten Wechselspannungsausgang (2B) und einen durch eine Kontrolleinheit (2H) kontrollierbaren Schalter (2C, 2E1, 2E2, 2E3, 2E4). Um das Problem des kostengünstig herstellbaren und gleichzeitig auch für leistungsstarke elektrische Verbraucher (4) geeigneten Wechselrichters (2) zu lösen, ist erfindungsgemäß ferner eine Messeinheit (2F) zum Messen einer Ausgangsleistung umfasst. Ein Schwellwert einer maximal erlaubten Ausgangsleistung ist vorgesehen und, vorzugsweise, einstellbar. Eine periodische Öffnungsdauer des Schalters (2C, 2E1, 2E2, 2E3, 2E4) bei Ausgangsleistungen oberhalb des Schwellwerts ist durch die Kontrolleinheit (2H) verringerbar.

## Beschreibung

### GEBIET DER ERFINDUNG

Die Erfindung betrifft einen Wechselrichter zum Versorgen von Verbrauchern mit elektrischer Leistung. Der Wechselrichter umfasst einen Gleichspannungseingang für Fahrzeugspannungsquellen, einen vorzugsweise als Netzsteckdose ausgebildeten Wechselspannungsausgang und einen durch eine Kontrolleinheit kontrollierbaren Schalter.

### TECHNOLOGISCHER HINTERGRUND

Bekannt sind insbesondere Wechselrichter, welche in Kraftfahrzeugen mobile Verbraucher mit Wechselstrom versorgen.

Die WO 93/21684 lehrt einen Schaltkreis zur Leistungskontrolle einer Vibrationspumpe in einem Heißgetränkeautomaten für den Betrieb in Fahrzeugen. Als Problem wird hier beschrieben, dass je nach Situation unterschiedliche Pumpdrücke zur optimalen Getränkeerzeugung erforderlich sind. Dementsprechend soll situationsbedingt die zur Verfügung stehende Leistung kontrolliert werden. Zur Leistungskontrolle wird vorgeschlagen, der Pumpe einen elektronischen Schalter zur Kommutation vorzulagern, welcher von einem Oszillator angesteuert wird. Die Oszillationsfrequenz wird wiederum durch ein Potentiometer bestimmt, welches der Nutzer entsprechend seinem Heißgetränkewunsch bedienen kann. Durch nutzerseitige Frequenzvariation des Schalters wird somit eine Variation der Leistung erzielt.

Dabei ist jedoch der Schaltkreis speziell auf die vom Heißgetränkeautomaten geforderten Leistungen abgestimmt. Eine Kombination des Wechselrichter-Schaltkreises mit anderen Verbrauchern ist nicht beschrieben. Dementsprechend fehlt auch die Lösung für das Problem, die zu leistungsstarken elektrischen Verbraucher auch dann mit Wechselspannung zu versorgen, wenn die Verbraucher in bestimmten Betriebssituationen eine Leistung abfragen, für die der Wechselrichter nicht ausgelegt ist. Würde ein zu leistungsstarker elektrischer Verbraucher, beispielsweise ein entsprechender Föhn, an den Schaltkreis angeschlossen, so würde über einen zu langen Zeitraum eine zu große elektrische Leistung gezogen und der Wechselrichterschaltkreis liefe Gefahr, aufgrund Überhitzung zerstört zu werden.

Die DE 298 02 872 U1 beschreibt einen Wechselrichter zum Wandeln einer Fahrzeugbatteriespannung in eine Netzspannung z.B. für Reisebusse. Anwendungen sind u.a. handelsübliche mit 220V/50Hz betriebene Kaffeemaschinen, Küchengeräte und dergleichen mehr. Als Problem wird eine gerätebedingt hohe geforderte Ausgangsleistung erwähnt. Als Lösungen werden einerseits umfangreiche Kühlmaßnahmen genannt sowie vorzugsweise eine Aufteilung in kleinere Einheiten vorgeschlagen. Beide Maßnahmen führen jedoch zu einer größeren Komplexität des Wechselrichtersystems und damit zu einer Verteuerung desselbigen. Dies mag im Einsatz von Bussen, Zügen und Flugzeugen noch vertretbar sein, ist jedoch insbesondere in einem auf den Endverbraucher ausgerichteten Markt wie den Personenkraftfahrzeugmarkt von besonderem Nachteil.

### DARSTELLUNG DER ERFINDUNG

Das Problem des kostengünstig herstellbaren und gleichzeitig auch für leistungsstarke elektrische Verbraucher geeigneten Wechselrichters wird mit den Merkmalen nach den Ansprüchen 1 und 7 gelöst.

Ein gattungsgemäßer Wechselrichter zum Versorgen von Verbrauchern mit elektrischer Leistung umfasst einen Gleichspannungseingang für Fahrzeugspannungsquellen, einen vorzugsweise als Netzsteckdose ausgebildeten Wechselspannungsausgang und einen durch eine Kontrolleinheit kontrollierbaren Schalter. Erfindungsgemäß ist ferner eine Messeinheit zum Messen einer Ausgangsleistung umfasst. Ein Schwellwert einer maximal erlaubten Ausgangsleistung ist vorgesehen und, vorzugsweise, einstellbar. Eine periodische Öffnungsdauer des Schalters bei Ausgangsleistungen oberhalb des Schwellwerts ist durch die Kontrolleinheit verringerbar.

Der Begriff "Wechselrichter" meint stets einen solchen Wechselrichter, welcher Gleich- in Wechselspannung umwandelt. Der Wechselrichter ist vorzugsweise auf Batterien als Spannungsquellen und besonders vorzugsweise auf KFZ- oder LKW-Batterien abgestimmt. Der Spannungspegel am Gleichspannungseingang liegt besonders vorzugsweise bei 12V bzw. 24V, wobei alle anderen Spannungspegel von Land-, Wasser- und Luftfahrzeugen (Zweiräder, Züge, Yachten, Flugzeuge), also beispielsweise 6V, 28V, 36V, 42V, 48V, 110V usw., ebenfalls in Betracht kommen.

Der Gleichspannungseingang ist vorzugsweise als ein Paar Ringklemmen, ein ISO-4165-Stecker, ein Zigarettenanzünderstecker oder als ein ISO-4165-Zigarettenanzünder-Kombistecker ausgebildet. Grundsätzlich aber können alle gängigen Steckerformen sinnvoll sein, welche für die verhältnismäßig großen Ströme in Bordspannungsnetzen ausgelegt sind.

Vorzugsweise umfasst der Wechselrichter einen Zerhacker zum Erzeugen einer pulsierenden Gleichspannung und einen Transformator zum Erzeugen geeigneter Spannungspegel aus der pulsierenden Gleichspannung.

Am Wechselspannungsausgang liegen vorzugsweise die gängigen Netzfrequenzen und -spannungen an. Dies sind insbesondere 50Hz bzw. 60 Hz, sowie 100V, 110V, 115V, 120V, 127V, 200V, 220V, 230V, 240V, wobei jede daraus resultierende Frequenz-Spannungs-Kombination sinnvoll sein kann. Darüber hinaus können aber auch Frequenzen und Spannungen jenseits der gängigen Stromnetze anliegen.

Der Wechselspannungsausgang ist vorzugsweise als Buchse und besonders vorzugsweise als Steckdosentyp der gängigen Stromnetze ausgebildet. Dies sind insbesondere die Typen A, B, C, D, E, F, G, H, I, J, K, L, M und IEC-60906-1. Der Wechselspannungsausgang kann aber auch nicht normierte Spezialanfertigungen umfassen.

Die Kontrolleinheit, beispielsweise ein Mikrocontroller, kontrolliert ein Öffnen und Schließen des Schalters. Der Schalter kann ein Schaltelement, aber auch zwei, drei, vier oder noch mehr Schaltelemente umfassen. Der Schalter kann aber auch mit dem vorzugsweisen Zerhacker zusammenfallen, so dass der Wechselrichter insgesamt nur ein Schaltelement umfasst. Vorzugsweise sind die Schalter analog zur CMOS-Technologie aufgebaut, so dass von zwei in Reihe geschalteten Schaltelementen stets Eines sperrt und Eines leitet. Vorzugsweise fällt eine Sekundärspannung des Transformators vollständig an zwei in Reihe geschalteten Schaltelementen ab.

Die erfindungsgemäße Messeinheit zum Messen einer Ausgangsleistung (Istwert) kann über eine Strom- und/oder Spannungsmessung, vorzugsweise innerhalb des Wechselrichters, die durch den Wechselrichter an den elektrischen Verbraucher geleitete elektrische Leistung erfassen. Die vom Verbraucher gezogene elektrische Leistung wird vorzugsweise als Effektivwert erfasst.

Erfindungsgemäß ist der Schwellwert einer maximal erlaubten Ausgangsleistung (Sollwert) einstellbar. Vorzugsweise ist die einzustellende Größe der Effektivwert des Schwellwerts. Die Einstellung des Schwellwerts könnte beispielsweise an einem entsprechenden Komparator, vorzugsweise aber an der Kontrolleinheit vorgenommen werden. Vorzugsweise wird der Schwellwert bereits während der Herstellung des Wechselrichters eingestellt. Allerdings ist es auch denkbar, dass der Endverbraucher in einem gewissen Rahmen den Schwellwert selbst einstellen kann. Er könnte in Eigenverantwortung z.B. bei Inkaufnahme einer entsprechend geringen Aktivität des elektrischen Verbrauchers ein oftmals ohnehin stark beanspruchte Bordnetz etwas schonen. Der Schwellwert könnte beispielsweise an einem entsprechenden Komparator, an einem separaten Mikrocontroller oder auch, bevorzugt, an der Kontrolleinheit eingestellt werden.

Die erfindungsgemäß verringerbare periodische Öffnungsdauer des Schalters bei Ausgangsleistungen oberhalb des Schwellwerts durch die Kontrolleinheit kann auf verschiedene Art und Weise erreicht werden. Vorzugsweise wird die Ausgangsleistung von der Messeinheit an die Kontrolleinheit weitergeleitet. Alternativ kann die Messeinheit ein Teil der Kontrolleinheit sein, so dass eine Weiterleitung der Ausgangsleistung hinfällig ist. In der Kontrolleinheit wird der vorzugsweise in der Kontrolleinheit selber eingestellte Sollwert mit dem Istwert verglichen. Im Falle eines den Sollwert übersteigenden Istwerts wird die periodische Öffnungsdauer des Schalters durch die Kontrolleinheit verringert, bis vorzugsweise der Istwert dem Sollwert entspricht. Alternativ kann der Istwert auch von der Kontrolleinheit unter den Sollwert gedrückt werden.

Der Begriff "periodische Öffnungsdauer" ist im Sinne des Tastgrads nach DIN IEC 60469-1 zu verstehen.

Der Schwellwert kann kleiner gleich 2000W, vorzugsweise kleiner gleich 1000W, besonders vorzugsweise kleiner gleich 600W und ganz besonders vorzugsweise kleiner gleich 400W sein. Hierbei ist insbesondere abzuwägen zwischen den typischen Leistungen elektrischer Verbraucher und den üblicherweise in Fahrzeugen zur Verfügung stehenden elektrischen Leistungen. So könnte eine Schwellwerteinstellung bei 1000W für Busse deutlich sinnvoller sein als für PKW.

Wenn eine verringerte Öffnungsdauer des Schalters dem Schwellwert und der Schwellwert einer Belastungsgrenze des Wechselrichters entspricht, so kann der elektrische Verbraucher mit der maximal auf Dauer durch den Wechselrichter lieferbaren Ausgangsleistung versorgt werden. Dies kann einen besonders gelungenen Kompromiss zwischen Endpreis und maximaler Ausgangsleistung des Wechselrichters bedingen. Die Belastungsgrenze kann ein Kompromiss zwischen garantierbarer Lebensdauer und elektrischer Leistung sein.

Wenn der Schalter ein Transistor ist, eröffnen sich sämtliche Vorteile der Halbleitertechnik gegenüber, beispielsweise, der Relaistechnik. U.a. unterliegen Relais einer gewissen mechanischen Empfindlichkeit und damit einem Verschleiß. Insbesondere bei dauerhaftem Schaltverhalten, wie etwa beim Wechselrichter, wären Relais dem Verschleiß und damit einer Fehleranfälligkeit ausgesetzt. Relais sind zudem langsamer als Transistoren. Eine zu erzeugende Frequenz von 50Hz entspräche einer Periodendauer von 20ms und damit Abfall- und Anstiegszeiten im Bereich von 10ms, welche für Relais bereits grenzwertig sind.

Der Schalter ist vorzugsweise ein IGBT oder ein Leistungs-MOSFET, da die zu schaltenden Leistungen im Wechselrichter die üblichen Leistungen der Mikroelektronik deutlich übersteigen können.

Wenn der Wechselrichter eine Schalterbrücke mit vier Schaltelementen umfasst, können zwei parallele Zweige analog zur CMOS-Technologie betrieben werden. Mittelabgriffe beider Zweige vervollständigten eine Brücke. Die Brücke ermöglicht einerseits definierte Spannungspotentiale nach CMOS-Technologie und andererseits eine periodische Inversion der Sekundärspannung, so dass bei einer entsprechenden Taktung aller vier Schaltelemente eine Wechselspannung am Ausgang der Brücke anliegt.

Wenn der Verbraucher wenigstens teilweise Nennleistungen oberhalb des Schwellwerts aufweist, dann kann der Wechselrichter die Ausgangsleistung auf den Schwellwert reduzieren. Vorzugsweise ist der Verbraucher auch unterhalb seiner Nennleistungen betriebsfähig.

Der Verbraucher ist vorzugsweise ein Zubereitungs-, ein Aufbewahrungs-, ein Werkzeug-, ein rechnerartiges, und/oder ein kosmetisches Gerät. Als Beispiele mögen ein Heißgetränkeautomat, eine Kochplatte, eine aktive Kühlbox, ein temperierbarer Getränkehalter, eine Bohrmaschine, ein Akkuschrauber-Ladegerät, ein Notebook, ein Smartphone und/oder ein Föhn dienen. Grundsätzlich kommen alle jene Geräte als Verbraucher in Frage, die schon einen nur potentiellen Nutzen auf Reisen bringen können.

Unter dem Begriff "ein" und in allen seinen grammatikalisch möglichen Fällen ist regelmäßig "wenigstens ein" zu verstehen. Falls "nur ein" gemeint ist, wird dies jeweils ausdrücklich klargestellt.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Wechselrichters dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigt
- Figur 1: eine Übersicht beteiligter Geräte in einem Blockdiagramm,
- Figur 2: einen Schaltkreis mit wesentlichen Bauteilen eines beispielhaften Wechselrichters und eines Heißgetränkeautomaten,
- Figur 3: einen Verlauf einer Ausgangsspannung über der Zeit mit einem hohen Tastgrad,
- Figur 4: einen Verlauf einer Ausgangsspannung über der Zeit mit einem niedrigen Tastgrad,

### DETAILLIERTE BESCHREIBUNG VON AUSFÜHRUNGSBEISPIELEN

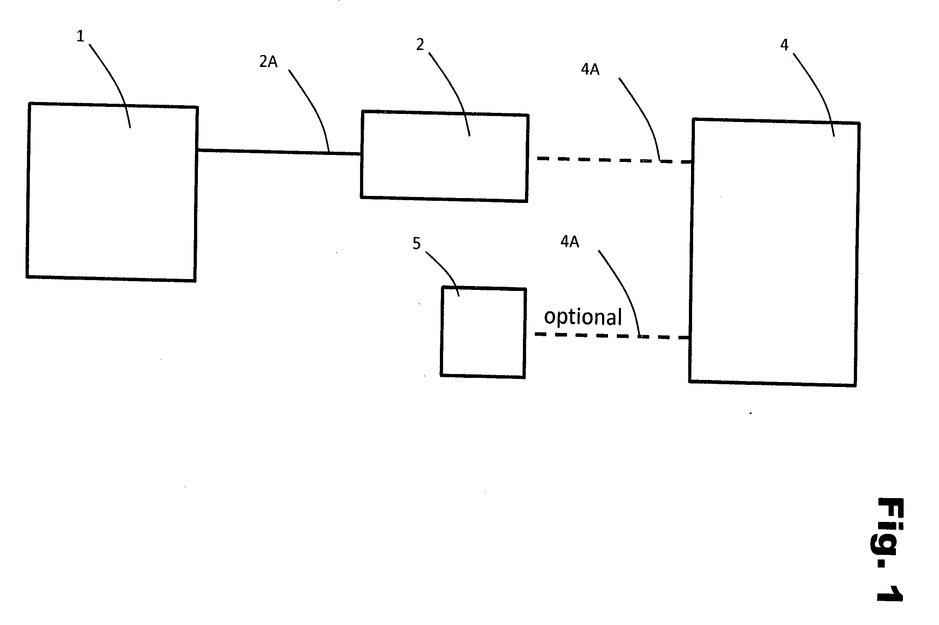

Fig. 1 stellt ein Blockdiagramm mit einem Wechselrichter 2 und mit dem Wechselrichter 2 in möglicher Wechselwirkung stehender Geräte und Komponenten dar. Der Wechselrichter 2 kann bei Bedarf eingangsseitig über Anschlussleitungen 2A mit Ringklemmen mit einem Bordnetz eines PKW und damit auch mit einer Autobatterie 1 als Spannungsquelle verbunden werden. Ausgangsseitig kann ein kleiner Heißgetränkeautomat 4 mittels eines handelsüblichen Netzsteckerkabels 4A an eine handelsübliche Netzsteckdose 2B angeschlossen werden. Der Heißgetränkeautomat 4 ist nun betriebsbereit.

Wahlweise kann der Heißgetränkeautomat 4 natürlich auch, aufgrund seines handelsüblichen Netzsteckerkabels 4A und seiner auf übliche Netzfrequenzen abgestimmten Dimensionierung, mit einer Netzsteckdose 5 eines Gebäudes verbunden werden. Der Heißgetränkeautomat 4 kann somit in Gebäuden und auf Reisen genutzt werden, wobei, im Falle des bereits im PKW untergebrachten Wechselrichters 2, lediglich der Netzstecker 4A des Heißgetränkeautomaten 4 in die Netzsteckdose 2B des Wechselrichters 2 gesteckt werden muss.

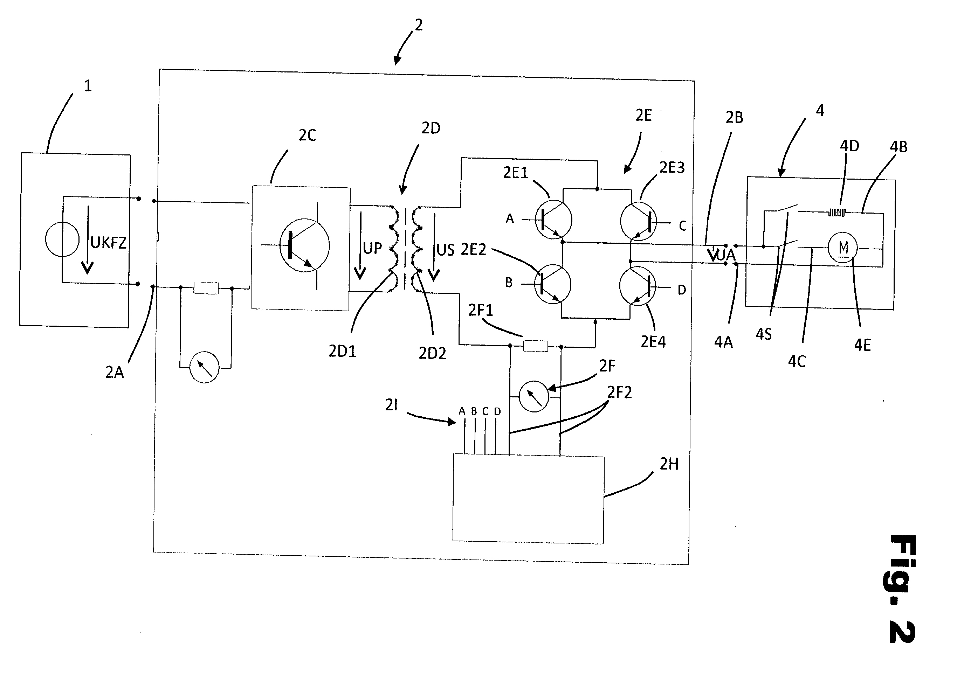

Fig. 2 verdeutlicht den Aufbau des Wechselrichters 2 und des beispielhaft angeschlossenen Heißgetränkeautomaten 4. Die Autobatterie 1 liefert eine Gleichspannung von nominell etwa 12V, welche über die Anschlussleitungen 2A an einer Primärseite 2D1 eines Transformators 2D abfällt, sofern ein eingangsseitiger IGBT 2C mit der Funktion eines Zerhackers und mit einer Frequenz von 100Hz einen Stromfluss momentan gerade zulässt. Der durch den IGBT 2C rechteckähnliche Verlauf der Spannung wird mittels eines entsprechenden Windungszahlverhältnisses des Transformators 2D auf eine Rechteckspannung mit einem Effektivwert von 230V an der Sekundärseite 2D2 hochtransformiert.

Parallel zur Sekundärwicklung 2D2 ist eine IGBT-Brücke 2E, bestehend aus vier IGBTs 2E1, 2E2, 2E3, 2E4 angeordnet. Es sind je zwei IGBTs in einem Zweig (2E1 und 2E2, bzw. 2E3 und 2E4) in Reihe geschaltet, wobei beide Zweige parallel zueinander liegen. Beide Zweige weisen je einen Mittelabgriff zwischen den IGBTs (also zwischen 2E1 und 2E2 bzw. 2E3 und 2E4) auf. Die beiden Mittelabgriffe bilden die Kontakte der ausgangsseitigen Netzsteckdose 2B des Wechselrichters 2. An der Sekundärseite 2D2 des Transformators 2D liegt eine Rechteck-Gleichspannung mit 230V-Effektivwert an. Um die gewünschte Rechteck-Wechselspannung (Ausgangsspannung U_{A}) an der Netzsteckdose 2B zu erzielen, werden die IGBTs 2E1, 2E2, 2E3, 2E4 der Brücke 2E entsprechend alternierend geschaltet. Die Frequenz verringert sich aufgrund der Alternierung auf 50Hz, wobei nach wie vor der durch den Zerhacker 2C vorgegebene Tastgrad vorliegt.

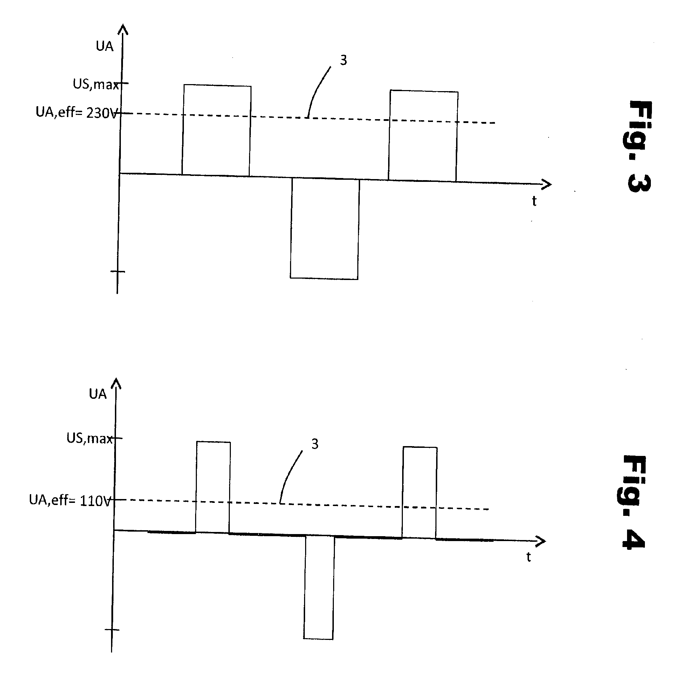

Eine Kontrolleinheit 2H kontrolliert die Gates A, B, C, D der IGBTs 2E1, 2E2, 2E3, 2E4 über Kontrollleitungen 2I. Ein Spannungsmessgerät 2F mit einem Messwiderstand 2F1 und Messsignalleitungen 2F2 hin zur Kontrolleinheit 2H erfasst die Spannung am Messwiderstand 2F1. Aus diesem Spannungswert kann die Kontrolleinheit 2H den durch den Heißgetränkeautomaten 4 fließenden Effektivstrom und damit auch die vom Heißgetränkeautomaten 4 gezogene elektrische Leistung ermitteln. Im Falle einer Überlastung durch eine Ausgangsleistung oberhalb des eingestellten Schwellwerts von 400W, reagiert die Kontrolleinheit und fährt den Wechselrichter in den gedrosselten Betrieb (hierzu s. Fig. 3 und 4).

Der Heißgetränkeautomat 4 umfasst zwei durch zwei Schalter 4S steuerbare Stromkreise 4B und 4C. Der Stromkreis 4B weist eine Heizwendel 4D auf, welche die elektrische Leistung in Heizleistung für heißes Wasser umwandelt. Nach Abschluss des Heizvorgangs wird der Stromkreis 4B geöffnet, der Stromkreis 4C wird geschlossen und der Motor 4E springt an. Das heiße Wasser wird nun durch das in einem Pad befindliche Kaffeepulver gepresst und fließt in eine Tasse.

Fig. 3 skizziert eine Rechteck-Wechselspannung U_{A} am Ausgang des Wechselrichters 2 über der Zeit t mit einem bestimmten Tastgrad im Normalbetrieb (nicht gedrosselter Betrieb). Der Effektivwert der Spannung beträgt im Normalbetrieb 230V und liegt unterhalb des Spitzenwerts der rechteckförmigen Ausgangsspannung U_{A}.

Erkennt die Kontrolleinheit 2H eine Überlastung des Wechselrichters 2, insbesondere während des Heizvorgangs des Heißgetränkeautomaten 4, so geht der Wechselrichter in den gedrosselten Betrieb.

Fig. 4 skizziert eine Rechteck-Wechselspannung U_{A} am Ausgang des Wechselrichters 2 über der Zeit t mit einem verringerten Tastgrad im gedrosselten Betrieb. Der an der ausgangsseitigen Netzsteckdose 2B anliegende Tastgrad wurde durch die Kontrolleinheit 2H im Extremfall verringert. Im entsprechenden Maße sinkt der Wert der anliegenden Effektivspannung von U_{A} (nicht aber der Spitzenwert des rechteckförmigen Spannungsverlaufes). In der Folge verringert sich die Leistung, die der Heißgetränkeautomat 4 insbesondere beim Heizen verbrauchen kann. Die Einstellungen (Schwellwert, Verringerung des Tastgrads) sind so gewählt, dass die Heizwendel 4D statt rund 800W lediglich 400W ziehen kann. Zwar verlängert sich der Heizvorgang entsprechend, doch dafür kann der Wechselrichter 2 entsprechend schlank dimensioniert und somit verhältnismäßig günstig hergestellt werden.

### BEZUGSZEICHENLISTE

- 1: Fahrzeugspannungsquellen
- 2: Wechselrichter
- 2A: Gleichspannungseingang
- 2B: Wechselspannungsausgang
- 2C: Zerhacker
- 2D: Transformator
- 2D1: Primärseite
- 2D2: Sekundärseite
- 2E: Brücke
- 2E1: Schalter
- 2E2: Schalter
- 2E3: Schalter
- 2E4: Schalter
- 2F: Messeinheit
- 2F1: Messwiderstand
- 2F2: Messsignalleitungen
- 2H: Kontrolleinheit
- 2I: Steuerleitungen
- 3: Effektivausgangsspannung
- 4: Verbraucher
- 4A: Netzkabel
- 4S: Schalter
- 4B: Stromkreis
- 4C: Stromkreis
- 4D: Motor
- 4E: Heizwendel
- 5: Netzsteckdose

## Patentansprüche

1. Wechselrichter (2) zum Versorgen von Verbrauchern (4) mit elektrischer Leistung, umfassend einen Gleichspannungseingang (2A) für Fahrzeugspannungsquellen (1), einen vorzugsweise als Netzsteckdose ausgebildeten Wechselspannungsausgang (2B) und einen durch eine Kontrolleinheit (2H) kontrollierbaren Schalter (2C, 2E1, 2E2, 2E3, 2E4),
**dadurch gekennzeichnet, dass**
der Wechselrichter (2) eine Messeinheit (2F) zum Messen einer Ausgangsleistung umfasst; ein Schwellwert einer maximal erlaubten Ausgangsleistung vorgesehen und, vorzugsweise, einstellbar ist; eine periodische Öffnungsdauer des Schalters (2C, 2E1, 2E2, 2E3, 2E4) bei Ausgangsleistungen oberhalb des Schwellwerts durch die Kontrolleinheit (2H) verringerbar ist.

2. Wechselrichter (2) nach Anspruch 1, **dadurch gekennzeichnet, dass** der Schwellwert kleiner gleich 2000W, vorzugsweise kleiner gleich 1000W, besonders vorzugsweise kleiner gleich 600W, und ganz besonders vorzugsweise kleiner gleich 400W ist.

3. Wechselrichter (2) nach Anspruch 1 oder 2, **dadurch gekennzeichnet, dass** eine verringerte Öffnungsdauer des Schalters (2C, 2E1, 2E2, 2E3, 2E4) dem Schwellwert entspricht.

4. Wechselrichter (2) nach einem der Ansprüche 1 bis 3, **dadurch gekennzeichnet, dass** der Schalter (2C, 2E1, 2E2, 2E3, 2E4) ein Transistor und vorzugsweise ein IGBT oder ein Leistungs-MOSFET ist.

5. Wechselrichter (2) nach einem der Ansprüche 1 bis 4, **dadurch gekennzeichnet, dass** der Schalter (2C, 2E1, 2E2, 2E3, 2E4) vorzugsweise wenigstens zwei (2E1, 2E2) und besonders vorzugsweise wenigstens vier Schalteinheiten (2E1, 2E2, 2E3, 2E4) umfasst.

6. Wechselrichter (2) nach einem der Ansprüche 1 bis 5, **dadurch gekennzeichnet, dass** die Messeinheit (2F) ein Strom- und/oder Spannungsmessgerät aufweist.

7. Wechselrichter (2) an einem Verbraucher (4) zum Versorgen des Verbrauchers (4) mit elektrischer Leistung, insbesondere nach einem der Ansprüche 1 bis 6, umfassend einen Gleichspannungseingang (2A) für Fahrzeugspannungsquellen (1), einen vorzugsweise als Netzsteckdose ausgebildeten Wechselspannungsausgang (2B) und einen durch eine Kontrolleinheit (2H) kontrollierbaren Schalter (2C, 2E1, 2E2, 2E3, 2E4),
**dadurch gekennzeichnet, dass**
der Wechselrichter (2) eine Messeinheit (2F) zum Messen einer Ausgangsleistung umfasst; ein Schwellwert einer maximal erlaubten Ausgangsleistung vorgesehen und, vorzugsweise, einstellbar ist; eine periodische Öffnungsdauer des Schalters (2C, 2E1, 2E2, 2E3, 2E4) bei Ausgangsleistungen oberhalb des Schwellwerts durch die Kontrolleinheit (2H) verringerbar ist.

8. Wechselrichter (2) nach Anspruch 7, **dadurch gekennzeichnet, dass** der Verbraucher (4) wenigstens teilweise Nennleistungen oberhalb des Schwellwerts aufweist.

9. Wechselrichter (2) nach Anspruch 7 oder 8, **dadurch gekennzeichnet, dass** der Verbraucher (4) unterhalb seiner Nennleistungen betriebsfähig ist.

10. Wechselrichter (2) nach einem der Ansprüche 7 bis 10, **dadurch gekennzeichnet, dass** der Verbraucher (4) ein Zubereitungs-, ein Aufbewahrungs-, ein Werkzeug-, ein rechnerartiges, und/ oder ein kosmetisches Gerät ist.
